# EUROPEAN PATENT APPLICATION

(11) **EP 4 585 460 A1**
(43) Date of publication of application: **16.07.2025**
(21) Application number: 25150462.7
(22) Date of filing: 07.01.2025
(51) Int. Cl.: B60N 2/58, B29C 48/05, B60N 2/70, D04H 3/037

(54) **SEAT ASSEMBLY AND METHOD OF MANUFACTURE**

(30) Priority: 09.01.2024 US 202463619049 P; 09.08.2024 DK PA202470209; 04.12.2024 US 202418968723
(71) Applicant: Lear Corporation, Southfield, MI 48033 (US)
(72) Inventor: Hale, David, Northville, Michigan, 48168 (US); Karges, Mark, Macomb, Michigan, 48044 (US); Hallock, Joshua, Warren, Michigan, 48088 (US); Johnson, Christopher D., Novi, Michigan, 48377 (US); Duncan, Bradley C., Harrison Twp., Michigan, 48045 (US); Blair, Samuel, Troy, Michigan, 48083 (US); Abdella, David J., Royal Oak, Michigan, 48073 (US)
(74) Representative: Grünecker Patent- und Rechtsanwälte PartG mbB

(57) **Abstract**

A product includes a filament mesh member, a trim cover, and a hook and loop fastening system. The filament mesh member comprises a set of filaments of thermoplastic material, wherein each member of the set of filaments is bonded to at least one other member of the set of filaments. The trim cover is disposed over the filament mesh member. The hook and loop fastening system comprises a loop portion and a hook portion. One of the loop portion and the hook portion is attached to the filament mesh member. The other of the loop portion and the hook portion is attached to the trim cover. The loop portion and the hook portion cooperate to secure the trim cover to the filament mesh member.

## Description

### CROSS-REFERENCE TO RELATED APPLICATIONS

This application claims priority to U.S. Patent Application Serial No. 18/968,723 filed on December 4, 2024, which in turn claims the benefit of U.S. provisional application Serial No. 63/619,049, filed January 9, 2024, and priority to Denmark application Serial No. PA 2024 70209 filed August 9, 2024, the disclosures of which are hereby incorporated in their entirety by reference herein. This application further claims priority to Denmark application Serial No. PA 202470209 filed August 9, 2024, which in turn claims priority to U.S. provisional application Serial No. 63/619,049, filed January 9, 2024, the disclosures of which are hereby incorporated in their entirety by reference herein. This application further claims priority to U.S. provisional application Serial No. 63/619,049, filed January 9, 2024, the disclosures of which is hereby incorporated in its entirety by reference herein.

### TECHNICAL FIELD

This relates to seat assembly having a cushion comprising a filament mesh structure and a method of manufacture.

### BRIEF DESCRIPTION OF THE DRAWINGS

Figure 1 is a perspective view of an example of a seat assembly including a filament mesh structure;
Figure 2 is schematic view of an example of a manufacturing system for making the filament mesh structure;
Figure 3A is an exploded view of examples of a trim cover and a cushion, the cushion comprising a filament mesh structure;
Figure 3B is a magnified view of area 3B from Figure 3A;
Figure 4 is perspective view of a portion of the trim cover separated from a portion of the cushion illustrating a hook and loop fastening system for securing the trim cover to the cushion;
Figure 5 is a schematic view of a first system for attaching a first portion of the hook and loop fastening system to the trim cover and attaching a second portion of the hook and loop fastening system to the cushion;
Figure 6 is a schematic view of a second system for attaching the first portion of the hook and loop fastening system to the trim cover and attaching the second portion of the hook and loop fastening system to the cushion;
Figures 7 and 8 are schematic views of a retainer assembly utilized for attaching the second portion of the hook and loop fastening system to the cushion;
Figure 9 is a schematic view of a third system for attaching the first portion of the hook and loop fastening system to the trim cover and attaching the second portion of the hook and loop fastening system to the cushion;
Figure 10 is a perspective view of a clip for attaching the second portion of the hook and loop fastening system to the cushion;
Figure 11 is an end view of the clip shown in Figure 10;
Figure 12 is a plan view of a portion of the clip shown in Figure 10;
Figure 13 is a side view of a portion of the clip shown in Figure 10;
Figure 14 is a flowchart of a method for securing the trim cover to the cushion;
Figure 15 is a schematic view of a fourth system for attaching the first portion of the hook and loop fastening system to the trim cover and attaching the second portion of the hook and loop fastening system to the cushion; and
Figure 16 is a perspective view of the second portion of the hook and loop fastening system as attached to the cushion.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising" when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

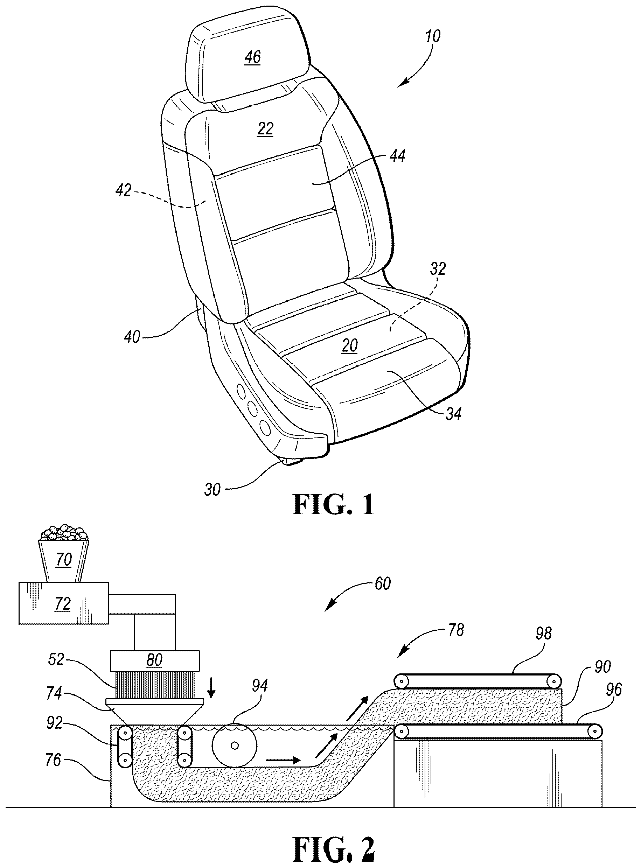

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats as shown, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof. In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both. The trim cover 34 may also be attached to an attachment pad as will be discussed in more detail below.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof In some configurations, the seat back frame 40 includes a panel, pan, suspension mat, or suspension wires upon which the cushion 42 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both. The trim cover 44 may also be attached to an attachment pad as will be discussed in more detail below.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

Referring to Figure 2, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72 melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and a filament 52 contacts and bonds to at least one other filament 52. The funnel 74 has an inlet opening or funnel inlet and an outlet opening or funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Some filaments may slide along the funnel 74 or an intervening sheet that is disposed on the funnel 74 as the filaments move toward the funnel outlet. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as a mesh member or filament mesh structure 90.

The cooling tank 76 holds a liquid, such as water or a mixture of water and another fluid. The liquid in the cooling tank 76 helps support the entangled and bonded filaments 52 to limit further compacting or consolidation of the filaments 52 into a less open or less porous arrangement and maintains a desired porosity and density of the filament mesh structure 90. Thus, the liquid provides some buoyancy or resistance that can result in additional bending, curling, or looping of the filaments 52 adjacent to the surface of the liquid or within the funnel 74 to further build the filament mesh structure 90. The liquid also cools the filaments 52 when the filaments 52 are in the liquid. For instance, the liquid cools the filaments 52 from the outside to solidify the filaments 52 and prevent the filaments 52 from bonding at additional locations. At this point, the filaments 52 are relatively stiff and no longer in a plastic state and thus generally maintain a shape and are not moldable or reformable without being reheated.

The material handling subsystem 78 transports the filament mesh structure 90 through the cooling tank 76. The material handling subsystem 78 includes various rollers and conveyors that help move the filament mesh structure 90 through the liquid and out of the liquid. In some configurations, a tractor conveyor 92 is provided in the cooling tank 76 to help pull the filament mesh structure 90 away from the funnel 74 and to counter buoyancy of the filaments 52.

One or more other rollers, such as roller 94, keep the filament mesh structure 90 submerged in the liquid and guide the filament mesh structure 90 through the cooling tank 76. For example, the roller 94 may guide the filament mesh structure 90 toward a conveyor belt 96 and shaker table 98 that are disposed outside of the cooling tank 76. The shaker table 98 shakes the filament mesh structure 90 while it is on the conveyor belt 96 to remove liquid. Alternatively or in addition, the filament mesh structure 90 may be squeezed to remove liquid, air may be blown toward the filament mesh structure 90 to help remove liquid from the filament mesh structure 90, or both. It is also contemplated that the filament mesh structure 90 may also be allowed to drip dry, or dry in ambient air.

The manufacturing system 60 described above is a continuous flow process in which the filament mesh structure 90 is formed as a continuous structure when filament extrusion is not interrupted. Further processing of the filament mesh structure 90 is provided after exiting the cooling tank 76 to cut the filament mesh structure 90 into individual pieces or blanks for individual cushions. Such processing is conducted by a cutting subsystem of the manufacturing system 60. The cutting system may be of any suitable type. For instance, the cutting system may employ a blade, knife, hot knife, saw, fluid jet, or the like to cut the filaments 52 of the filament mesh structure 90 into a blank. The cutting system may be used to shape or contour the blank. It is also contemplated that a blank may be further shaped or contoured with other manufacturing processes, such as molding of the entire blank or a portion thereof.

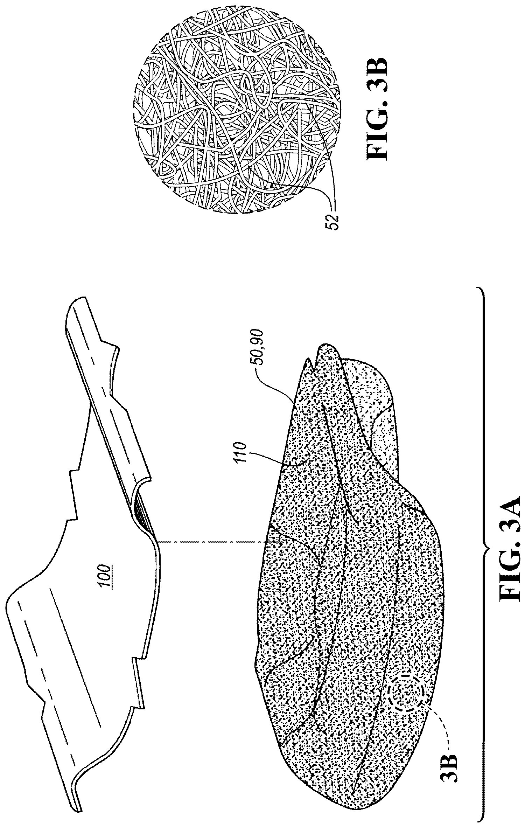

Referring to Figures 3A and 3B, an example of a cushion 50 is shown. The cushion in generically designated with reference number 50 for convenience in reference. It is to be understood that the structure and description of the cushion 50 is applicable to the cushion 32 of the seat bottom 20, the cushion 42 of the seat back 22, or both.

The cushion 50 is a non-foam component or includes at least one non-foam component. The non-foam component is primarily referred to as a mesh member but may also be referred to as a stranded member, looped member, entangled member, filament mesh structure, mesh structure, stranded mesh, looped mesh, entangled mesh, or mesh cushion. The cushion 50 is described below in the context of a cushion 50 that does not include foam material. In this context, the cushion 50 is made of filaments 52 of polymeric material that are randomly looped, bent, curled, or entangled and are bonded together. A filament 52 is directed bonded to another filament 52 rather than being indirectly bonded with a resin or other intermediate material.

The filaments 52, which may also be referred to as strands or threads, are made of any suitable material or materials. In some configurations, the filaments 52 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low-density polyethylene (LLPDE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments.

Filaments 52 that are randomly looped, bent, looped, curled, or entangled are bonded together where one filament 52 contacts another filament 52, thereby resulting in a lightweight, air permeable cushion (e.g., cushion 32 and/or 42) or mesh structure having openings or voids between the filaments 52. An example of a manufacturing system 60 of making a cushion or filament mesh structure is shown in Figure 2. In this example, the manufacturing system 60 includes a material supply 70, an extruder 72, and a funnel 74. The manufacturing system 60 also includes a cooling tank 76 and a material handling subsystem 78.

Referring to Figure 3A, an exploded view of a portion of the seat assembly 10 is shown that includes an example of the cushion 50 and an example of a trim cover 100. The trim cover 100 may be made from a cloth, textile, fabric material. The trim cover 100 may also referred to as a sheet or cloth cover. The cushion 50 comprises the filament mesh structure 90. In Figure 3A, the cushion 50 is illustrated without depicting individual filaments 52 of the filament mesh structure 90 for clarity. In some configurations, the cushion 50 has a contoured exterior side 110. The contoured exterior side 110 may have a partially or completely nonplanar profile and may include one or more curved surfaces or curved regions. In some configurations, the contoured exterior side 110 is concave or partially concave. The contoured exterior side 110 faces toward the trim cover 100. Moreover, the contoured exterior side 110 may face toward a seat occupant. The contoured exterior side 110 may contact a portion of the trim cover 100 in one or more regions.

The trim cover 100 is generically designated with reference number 100 for convenience in reference. It is to be understood that the trim cover 100 may be the trim cover 34 of the seat bottom 20 or the trim cover 44 of the seat back 22 as previously described. A portion of the trim cover 100 is shown in Figure 3A to make other features in this figure more visible. The trim cover 100 is disposed over the cushion 50 comprising the filament mesh structure 90 and may generally follow the curvature or contour of the cushion 50 when secured thereto. The trim cover 100 and the cushion may collectively form a manufactured product such as the vehicle seat bottom 20 or the vehicle seat back 22.

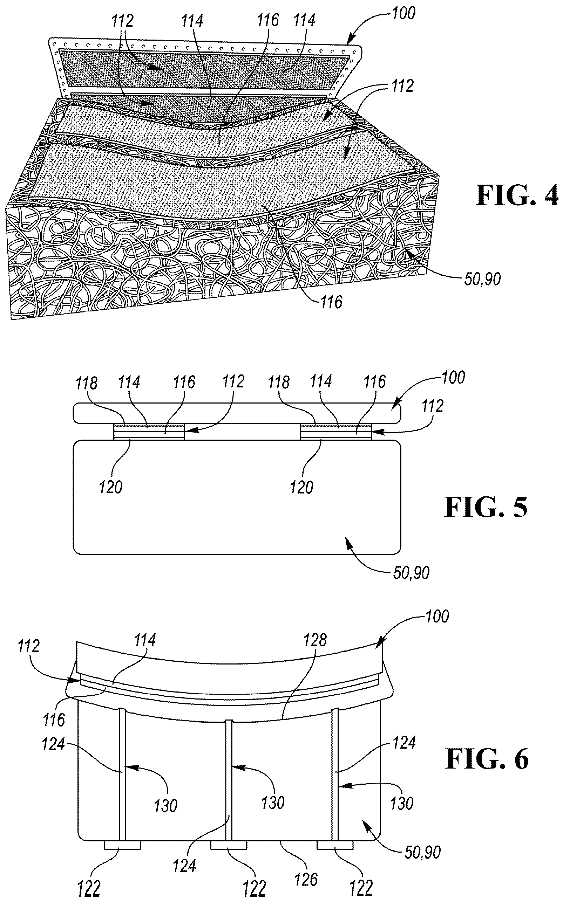

Referring to Figure 4, the cushion 50, comprising the filament mesh structure 90 and the trim cover 100 are illustrated in a separated manner to illustrate an attachment system 112 for securing the trim cover 100 to the filament mesh structure 90. The attachment system 112 may more specifically be one or more hook and loop fastening systems (e.g., Velcro^{®}). Each hook and loop fastening system includes a loop portion 114 and a hook portion 116. One of the loop portion 114 and the hook portion 116 is attached to the filament mesh structure 90 while the other of the loop portion 114 and the hook portion 116 is attached to the trim cover 100. The loop portion 114 and the hook portion 116 cooperate to secure the trim cover 100 to the filament mesh structure 90 to collectively form a product (e.g., the seat bottom 20 or the seat back 22).

It is noted that the loop portion 114 is illustrated as being attached to the trim cover 100 while the hook portion 116 is illustrated as being attached to the filament mesh structure 90. This configuration may be preferred since the loop portion 114 (i) may have a softer feel for a user that is engaging a product formed by the filament mesh structure 90 and the trim cover 100 (e.g., the seat bottom 20 or the seat back 22) and (ii) will not increase rigidity of the trim cover 100. However, the alternative configuration may be utilized if desired (e.g., the hook portion 116 may be attached to the trim cover 100 and the loop portion 114 may be attached to the filament mesh structure 90).

The loop portion 114 may be attached to the trim cover 100 and the hook portion 116 may be attached to the filament mesh structure 90, or vice versa, via several systems or methods. In the descriptions of the several attachment systems or methods below, reference is made to the loop portion 114 being attached to the trim cover 100 and the hook portion 116 being attached to the filament mesh structure 90. However, it should be understood that references to the loop portion 114 may be replaced by references to the hook portion 116 and references to the hook portion 116 may be replaced by references to the loop portion 114 for the alternative configuration where the loop portion 114 may is attached to the filament mesh structure 90 and where the hook portion 116 is attached to the trim cover 100.

In a first example of an attachment system or method, illustrated in Figure 5, the loop portion 114 is attached to the trim cover 100 via a first adhesive 118 and the hook portion 116 is attached to the filament mesh structure 90 via a second adhesive 120. The first adhesive 118 and the second adhesive 120 may be, spray adhesives, heat activated adhesives, pressure activated adhesives, epoxies, resins, light curable adhesives (e.g., ultraviolet light curable adhesives), or any other type of adhesive know in the art. For example, the adhesive may be comprised of the same material as the filament mesh structure 90 or other compatible material. Alternatively, the loop portion 114 may be attached to the trim cover 100 and the hook portion 116 may be attached to the filament mesh structure 90 via lamination or sonic welding. The first adhesive 118 and the second adhesive 120 may be disposed along surfaces of the loop portion 114 and the hook portion 116, respectively, that engage the trim cover 100 and the filament mesh structure 90, respectively, opposite to the surfaces of the loop portion 114 and the hook portion 116 that are configured to engage each other to secure the loop portion 114 to the hook portion 116.

A removable film of material may be disposed over the first adhesive 118 and the second adhesive 120 on the loop portion 114 and the hook portion 116, respectively. Such removable films may provide protection for the first adhesive 118 and the second adhesive 120 prior to securing the loop portion 114 and the hook portion 116 to the trim cover 100 and the filament mesh structure 90, respectively. Prior to securing the loop portion 114 and the hook portion 116 to the trim cover 100 and the filament mesh structure 90, respectively, the removable films may be removed to expose the first adhesive 118 and the second adhesive 120 so that the first adhesive 118 and the second adhesive 120 may engage the trim cover 100 and the filament mesh structure 90, respectively, to secure the loop portion 114 and the hook portion 116 to the trim cover 100 and the filament mesh structure 90, respectively.

In a second example of an attachment system or method, illustrated in Figure 6, the hook portion 116 is attached to the filament mesh structure 90 via one or more retainer 122 and a connector 124 combinations. A single retainer 122 and a connector 124 combination may be referred to as a retainer assembly 130. Each of the connectors 124 extend from a back of the hook portion is 116, through the filament mesh structure 90, and to a corresponding retainer 122. The retainers 122 which engage an opposing side 126 of the filament mesh structure 90 relative to the attachment system 112 (e.g., the hook and loop fastening system). The attachment system 112 is disposed along a side 128 of the of the filament mesh structure 90 that is opposite to the opposing side 126 of the filament mesh structure 90. The loop portion 114 may be attached to the trim cover 100 in Figure 6 in the same manner as described above with respect to Figure 5 (e.g., the loop portion 114 may be attached to the trim cover 100 via any adhesive known in the art, lamination, sonic welding, etc.).

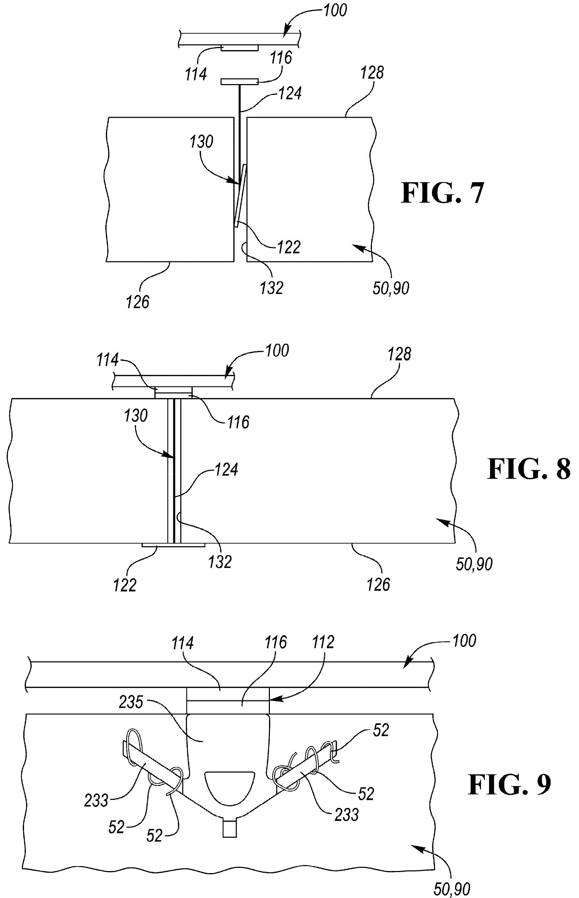

Figures 7 and 8 illustrate a retainer assembly 130 in more detail. The retainer assembly 130 may be placed in the cushion 50 comprising the filament mesh structure 90. In the illustrated embodiment, the hook portion 116 may be attached to the retainer assembly 130 while the loop portion 114 may be attached to the trim cover 110. The connector 124 may be sewn to the hook portion 116. The connector 124 may be also sewn to the retainer 122. The connector 124 may be provided with a width smaller than the width of the hook portion 116. The retainer 122 may include a thickness less than the width of the retainer 122. The connector 124 extends through a slot 132 in the cushion 50 comprising the filament mesh structure 90. The connector 124 may be composed of a textile material such as fabric, cloth, or the like.

The back of the hook portion 116 may be connected to a plate (e.g., similar to plate 404 discussed below with respect to the fourth example of an attachment system or method) that operates to increase the rigidity of the hook portion 116. The hook portion 116 may be connected to such a plate via an adhesive or via threading (e.g., the hook portion 116 may be sewn to the plate). The plate may in turn be connected to the connector 124. Once installed, the plate may engage an exterior (e.g., side 128) of the filament mesh structure 90.

The retainer 122 may be provided with a width greater than the width of the connector 124. The retainer 122 may be pivotally attached to the connector 124 and spaced apart from the hook portion 116. For example, the retainer 122 and hook portion 116 may be secured to opposing ends of the connector 124. The retainer 122 can pivot externally to the cushion 50 comprising the filament mesh structure 90 so that the width of the retainer 122 engages the seat the cushion 50 comprising the filament mesh structure 90. The retainer 122 retains the hook portion 116 upon the cushion 50 comprising the filament mesh structure 90. The retainer 122 may be composed of a polymeric material.

With reference to Figure 7, the retainer assembly 130 is shown partially inserted in the cushion 50 comprising the filament mesh structure 90. The retainer 122 of the retainer assembly 130 collapses along the connector 124 of the retainer assembly 130. The retainer 122 and the connector 124 are then inserted into the slot 132 formed through the cushion 50 comprising the filament mesh structure 90. The retainer 122 may be translated through the cushion 50 comprising the filament mesh structure 90 with the connector 124 still at least partially within the slot 132. The retainer 122 may be then expanded relative to the connector 124 into contact with a region of the cushion 50 comprising the filament mesh structure 90 adjacent to the slot 132 to retain the connector 124 within the slot 132. Figure 8 illustrates the retainer assembly 130 fully installed in the cushion 50 comprising the filament mesh structure 90 with the hook portion 116 and the retainer 122 disposed on and engaging opposite sides (e.g., side 128 and opposing side 126, respectively) of the cushion 50 comprising the filament mesh structure 90. Figure 8 also illustrates the engagement between the loop portion 114 and the hook portion 116 to secure the trim cover 100 to the cushion 50 comprising the filament mesh structure 90.

In a third example of an attachment system or method, illustrated in Figure 9, the hook portion 116 is attached to the filament mesh structure 90 via one or more hooks 233 that extend from a back of the hook portion 116, into the filament mesh structure 90, and engage at least one filament 52 of the set of filaments 52. More specifically, the hooks 233 may extend from an opposing side of the hook portion 116 relative to the hooks that are configured to engage the loops of the loop portion 114. The hooks 233 may more specifically be attached to and extend from a carrier 235. The hook portion 116 is in turn connected to the carrier 235. The hook portion 116 may be attached to the carrier 235 via an adhesive (e.g., any adhesive described herein or known in the art), lamination, sonic welding, etc. A surface of the carrier 235 that is opposite to the hooks 233 may be flush with an exterior of the filament mesh structure 90 once installed thereon. The loop portion 114 may be attached to the trim cover 100 in Figure 9 in the same manner as described above with respect to Figure 5 (e.g., the loop portion 114 may be attached to the trim cover 100 via any adhesive known in the art, lamination, sonic welding, etc.). The hooks 233 and carrier 235 may form portions of a clip 200 that is configured to secure the hook portion 116 to the filament mesh structure 90.

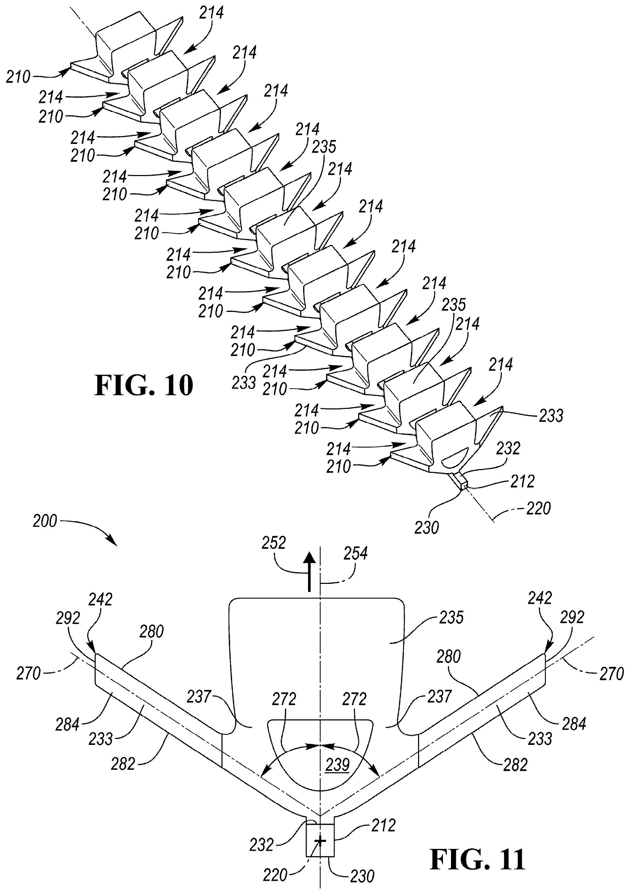

Referring to Figures 10-13, the clip 200 is shown in further detail. The clip 200 includes the several of the hooks 233 and the carriers 235. The clip 200 is configured to secure the hook portion 116 to a cushion, such as a cushion 50 that includes the filament mesh structure 90. The clip 200 is made of any suitable material or materials. In some configurations, the clip 200 is made of a polymeric material. The clip 200 may be made of the same material as the filaments 52 or a material that differs from the filaments 52. The polymeric material may be recyclable. The clip 200 is manufactured using any suitable process. For instance, the clip 200 may be molded or made with an additive manufacturing process, such as 3D printing. It is contemplated that the clip 200 is manufactured as a unitary one-piece component that may be cut to a suitable length that is installed in the filament mesh structure 90.

The clip 200 includes one or more of clip segments 210. In a configuration having multiple clip segments 210, a spine 212 is provided with the clip 200. In such a configuration, the spine 212 interconnects the clip segments 210. The clip segments 210 are spaced apart from each other such that a gap 214 is provided between one clip segment 210 and an adjacent clip segment 210. The clip 200 will primarily be described in the context of a clip 200 having multiple clip segments 210.

Referring to Figures 10 and 11, an example of a spine 212 is shown. The spine 212 is flexible and allows the clip segments 210 to be positioned at various orientations with respect to each other. The spine 212 may be linear or extend along a linear spine axis 220 when the spine 212 is in a free state such as is shown in Figure 10. The spine 212 includes a bottom side 230 and a top side 232. The bottom side 230 faces away from the clip segments 210. In some configurations, the bottom side 230 extends the length of the clip 200. The top side 232 is disposed opposite the bottom side 230. As such, the top side 232 may face toward the clip segments 210. In some configurations, the top side 232 is segmented and extends from one clip segment 210 to an adjacent clip segment 210 or is visible between adjacent clip segments 210, 210.

In the configuration shown in Figures 10 and 11, the spine 212 is positioned below the clip segments 210. It is also contemplated that the spine 212 may be positioned at a higher elevation than is shown in these figures. For instance, the spine 212 may extend from a side of a first clip segment 210 that faces toward an adjacent second clip segment 210 to a corresponding side of the adjacent clip segment 210 that faces toward the first clip segment 210 rather than being disposed below one or more clip segments 210. As an example, the spine 212 may be moved up from the position shown in Figure 11 such that the top surface 232 in Figure 11 becomes the bottom surface 230 and the top surface 232 may be hidden behind the clip segment 210 from the perspective shown.

Referring primarily to Figure 11, a clip segment 210 includes at least one retention feature such as one of the carriers 235. The carrier 235 extends upward from the spine 212. In some configurations, the carrier 235 extends from a top side 232 of the spine 212. The carrier 235 is shown to extend upward from the spine 212 via two posts 237, which creates a cavity 239. In some configurations the carrier 235 may extend directly upward from the spine 212, filling cavity 239 and eliminating posts 237.

The carrier 235 may extend away from the spine 212 in a first direction 252 along or with respect to a center plane 254 of the clip segment 210. The center plane 254 may bisect the clip segment 210. The first direction 252 extends away from the spine 212 or in an upward direction from the perspective shown in Figure 11. The center plane 254 may extend through the spine 212. For instance, the center plane 254 may bisect the spine 212. The center plane 254 may also bisect the carrier 235. The spine axis 220 may be disposed in the center plane 254 of a clip segment 210, such as when the clip 200 is in a free state.

One or more barbs 242 are provided with a clip segment 210. The barbs 242 may correspond to the hooks 233. The barbs 242 extend from a carrier 235, the spine 212, or both. In Figure 11, two barbs 242, 242 are shown, with each barb 242 extending from the carrier 235 and spine 212. In some configurations, the barbs 242 are spaced apart from and do not extend from the spine 212. In such a configuration, a barb 242 extends from a corresponding carrier 235 in a direction that extends away from the center plane 254. Similarly, a barb 242 that extends from the spine 212 may also extend in a direction that extends away from the center plane 254.

A barb 242 is disposed in a nonparallel and non-perpendicular relationship with the center plane 254. Moreover, a barb 242 is oriented to extend away from the bottom side 230 of the spine 212, or in an upward direction from the perspective shown in Figure 11. Thus, a barb 242 extends in the first direction 252 as the distance from the spine 212 increases. As such, a barb 242 may extend further away from the bottom side 230 as the barb 242 extends away from the spine 212 and the center plane 254. In the configuration shown, the first barb 242 extends away from the second barb 242. As such, the first barb 242 and the second barb 242 may extend in opposite directions with respect to each other or with respect to the center plane 254.

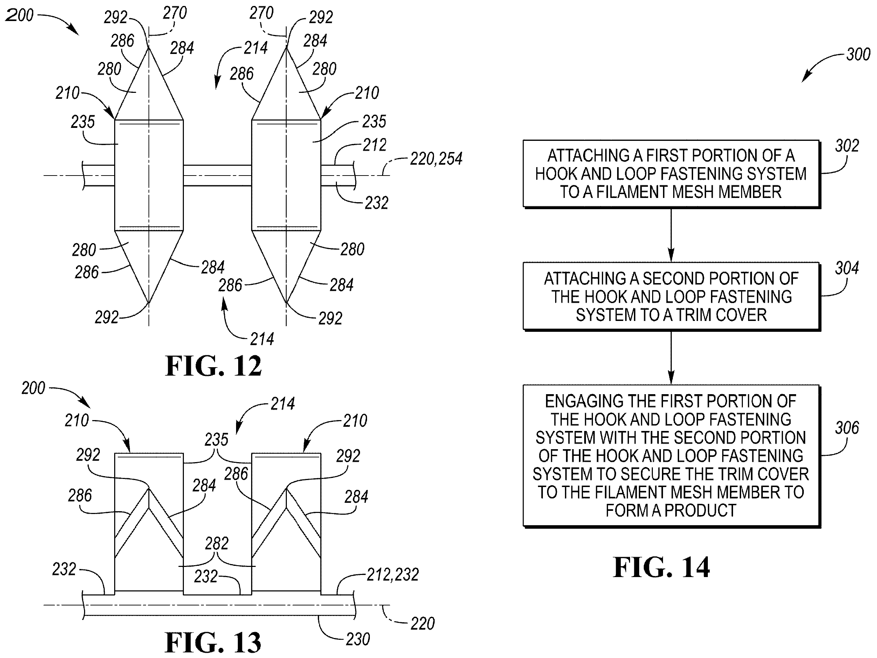

A barb 242 may extend away from the bottom side 230 in a linear or nonlinear manner. In Figure 11, each barb 242 is illustrated as extending along a corresponding barb axis 270. The barb axis 270 intersects the center plane 254 at an acute angle 272 as is shown in Figure 11 and may be disposed substantially perpendicular to the center plane 254 when viewed from above or in a plan view as is shown in Figure 12. The term "substantially perpendicular" is used herein to designate features or axes that are the same as or very close to perpendicular and includes features that are within ±3° of being perpendicular each other. In some configurations, the barb axis 270 intersects the center plane 254 at a location that does not intersect the spine 212, such as at a location along the carrier 235. It is also contemplated that a barb 242 may be curved or extend in a nonlinear manner. For instance, a barb 242 or a portion thereof may extend along an arc or curve that may curve upward from the perspective shown or be convex with respect to the spine 212.

In some configurations, the barb 242 includes an upper side 280, a lower side 282, a first lateral side 284, and a second lateral side 286.

The upper side 280 faces away from the spine 212. In some configurations, the upper side 280 extends from a corresponding carrier 235. For instance, the upper side 280 may intersect or extend from a corresponding carrier 235. The upper side 280 extends further away from the spine 212 as the upper side 280 extends away from a corresponding carrier 235 from which it extends. The upper side 280 may have a planar or a nonplanar configuration.

The lower side 282 is disposed opposite the upper side 280. As such, the lower side 282 faces toward the spine 212. In some configurations, the lower side 282 extends from a corresponding carrier 235. In some configurations, the lower side 282 intersects or extends from the spine 212. The lower side 282 may have a planar or nonplanar configuration. The lower side 282 extends further away from the spine 212 as the lower side 282 extends away from a corresponding carrier 235 from which it extends. In some configurations, the lower side 282 has a greater length than the upper side 280.

In some configurations, the lower side 282 is disposed substantially parallel to the upper side 280. The term "substantially parallel" as used herein means the same as or very close to parallel and includes features or axes that are within ±3° of being parallel each other. The lower side 282 does not intersect the upper side 280 when the lower side 282 is disposed substantially parallel to the upper side 280. In some configurations, the lower side 282 and the upper side 280 are disposed in a nonparallel relationship. For instance, the lower side 282 and the upper side 280 may become closer together as the distance from the center plane 254 increases. It is contemplated in some configurations that the lower side 282 may intersect the upper side 280, such as at a distal end of the barb 242.

Referring to Figures 11-13, the first lateral side 284 extends from a corresponding carrier 235. The first lateral side 284 extends from the upper side 280 to the lower side 282. As is best shown in Figure 12, the first lateral side 284 extends toward the second lateral side 286 as the distance from the center plane 254 increases. For instance, the first lateral side 284 may extend toward or become closer to a corresponding barb axis 270 as the distance from the center plane 254 increases. It is contemplated that the first lateral side 284 may be planar or nonplanar.

The second lateral side 286 extends from a corresponding carrier 235 and is disposed opposite the first lateral side 284. The second lateral side 286 extends from the upper side 280 to the lower side 282. The second lateral side 286 extends toward the first lateral side 284 as the distance from the center plane 254 increases. For instance, the second lateral side 286 may extend toward or become closer to a corresponding barb axis 270 as the distance from the center plane 254 increases. Such a configuration facilitates installation of the clip 200 into the cushion 50. It is contemplated that the second lateral side 286 may be planar or nonplanar.

In some configurations, the first lateral side 284 intersects the second lateral side 286 at a distal end 292 of the barb 242. This may result in a barb 242 having a triangular configuration when viewed from above when the first lateral side 284 and the second lateral side 286 have planar configurations that are oriented vertically as is best shown in Figure 12. It is also contemplated that the distal end 292 may be rounded or provided with a radius rather than meeting along a linear edge.

Insertion of the clip 200 into the filament mesh structure 90 causes the barbs 242 to interact with the filaments 52 such that at least some of the filaments 52 contact a barb 242 and the barb 242 becomes ensnared in the filaments 52 such that the clip 200 is retained in the filament mesh structure 90. At least a portion of a barb 242 is received in a void or gap between members of the set of filaments 52. The barb 242 contacts one or more members of the set of filaments 52.

Due to the looping or curling of the filaments 52, a filament 52 may contact the clip 200 at various locations. In some configurations, at least one member of the set of filaments 52 contacts the first and second barbs 242, 242 of a clip segment 210.

In some configurations, at least one member of the set of filaments 52 contacts more than one clip segment 210. As an example, a clip segment 210 may be inserted into a slit defined by the filament mesh structure 90. At least one member of the set of filaments 52 contacts a first clip segment 210 and a second clip segment 210. The filaments 52 may loop or curl around and contacting a barb 242 of the first clip segment 210 and a barb 242 of the second clip segment 210; however, it is to be understood that the filaments 52 need not form a closed loop around or encircle one or both barbs 242. For instance, a filament 52 may extend over a barb 242 and engage the upper side 280, may contact another side of a barb 242, or combinations thereof. For example, a filament that contacts the lower side 282 of a barb 242 may help limit downward movement or tilting of the clip 200, a filament 52 that contacts a lateral side of a barb 242, such as the first lateral side 284 or the second lateral side 286 may prevent or limit movement of the clip 200 in at least one direction along or within the slit.

Referring to Figure 14, a flowchart of a method 300 for securing the trim cover 100 to the cushion 50 comprising the filament mesh structure 90 is illustrated. The method 300 starts at block 302, where a first portion (e.g., one of the loop portion 114 and the hook portion 116) of a hook and loop fastening system (e.g., attachment system 112) is attached to a filament mesh member (e.g., filament mesh structure 90). Next, the method 300 moves on to block 304 where a second portion (e.g., the other of the loop portion 114 and the hook portion 116) of the hook and loop fastening system is attached to a trim cover (e.g., trim cover 100). The method 300 then moves on to block 306 wherein the first portion (e.g., one of the loop portion 114 and the hook portion 116) of the hook and loop fastening system engages with the second portion (e.g., the other of the loop portion 114 and the hook portion 116) of the hook and loop fastening system to secure the trim cover (e.g., trim cover 100) to the filament mesh member (e.g., filament mesh structure 90) to form a product (e.g., seat bottom 20 or seat back 22). It should be understood that the flowchart in Figure 14 is for illustrative purposes and that the method 300 should not be construed as limited to the flowchart in Figure 14. Some of the steps of the method 300 may be rearranged while others may be omitted entirely.

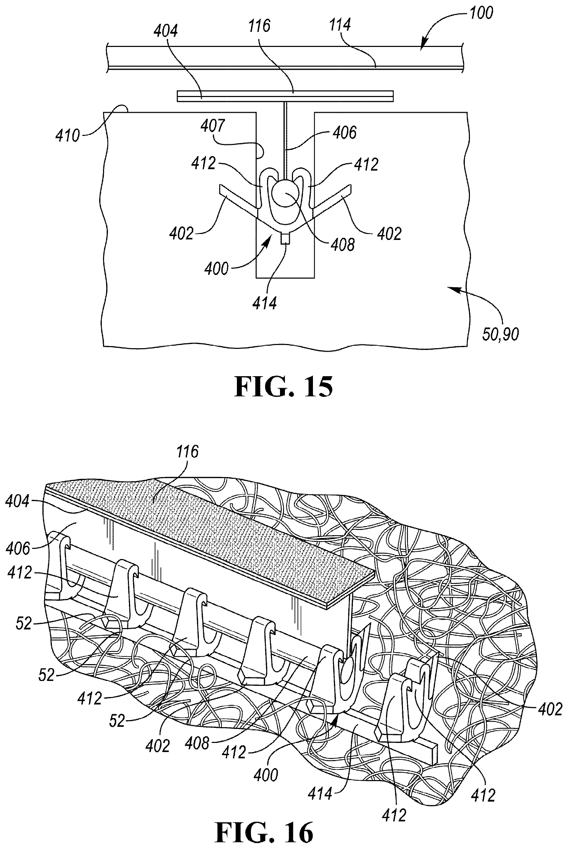

In a fourth example of an attachment system or method, illustrated in Figures 15 and 16, the hook portion 116 is attached to the filament mesh structure 90 via a clip 400. The clip 400 includes one or more first hooks 402 that extend from a back of the hook portion 116, into the filament mesh structure 90, and engage at least one filament 52 of the set of filaments 52. More specifically, the one or more first hooks 402 may extend from an opposing side of the hook portion 116 relative to the hooks of that are configured to engage the loops of the loop portion 114. The back of the hook portion 116 may be connected to a plate 404 that operates to increase the rigidity of the hook portion 116. The hook portion 116 may connected to the plate 404 via an adhesive or via threading (e.g., the hook portion 116 may be sewn to the plate 404). The plate 404 may in turn be connected to a connector 406 that includes a bead 408. The connector 406 may in turn be connected to the clip 400 to secure the hook portion 116 to the clip 400 which is connected to the filament mesh structure 90. The connector 406 extends through a slot 407 in the cushion 50 comprising the filament mesh structure 90.

Once installed, the plate 404 may engage an exterior 410 of the filament mesh structure 90. The connector 406 may be connected directly to the plate 404 and may be connected to the clip 400 via one or more second hooks 412 that extend from the clip 400. More specifically, the one or more second hooks 412 may engage the bead 408 on the connector 406. The connector may be made from a plastic material (e.g., beaded Duon 9). The clip 400 may include a series of one or more first hooks 402 and one or more second hooks 412 that are connected to each other via a spine 414, forming a rattlesnake configuration.

The loop portion 114 may be attached to the trim cover 100 in Figure 15 in the same manner as described above with respect to Figure 5 (e.g., the loop portion 114 may be attached to the trim cover 100 via any adhesive known in the art, lamination, sonic welding, etc.).

Clause 1. A product comprising: a filament mesh member comprising a set of filaments of thermoplastic material, wherein each member of the set of filaments is bonded to at least one other member of the set of filaments; a trim cover disposed over the filament mesh member; and a hook and loop fastening system comprising a loop portion and a hook portion, wherein (i) one of the loop portion and the hook portion is attached to the filament mesh member and (ii) the other of the loop portion and the hook portion is attached to the trim cover, wherein the loop portion and the hook portion cooperate to secure the trim cover to the filament mesh member.

Clause 2. The product of clause 1, wherein the one of the loop portion and the hook portion is attached to the filament mesh member via an adhesive.

Clause 3. The product of any one of clauses 1 to 2, wherein the other of the loop portion and the hook portion is attached to the trim cover via an adhesive.

Clause 4. The product of clause 1, wherein the one of the loop portion and the hook portion is attached to the filament mesh member via one or more hooks that extend from a back of the one of the loop portion and the hook portion, into the filament mesh member, and engage at least one filament of the set of filaments.

Clause 5. The product of any one of clauses 1 or 4, wherein the other of the loop portion and the hook portion is attached to the trim cover via an adhesive.

Clause 6. The product of clause 1, wherein the one of the loop portion and the hook portion is attached to the filament mesh member via a retainer and a connector, wherein (i) the connector extends from a back of the one of the loop portion and the hook portion, (ii) through the filament mesh member, and (iii) to the retainer which engages an opposing side of the filament mesh member relative to the hook and loop fastening system.

Clause 7. The product of any one of clauses 1 or 6, wherein the other of the loop portion and the hook portion is attached to the trim cover via an adhesive.

Clause 8. The product of any one of clauses 1 to 7, wherein the product is a vehicle seat bottom.

Clause 9. The product of any one of clauses 1 to 7, wherein the product is a vehicle seat back.

Clause 10. An attachment system comprising: a hook portion attached to one of a filament mesh member and a sheet, wherein the filament mesh structure comprises a set of filaments, wherein each member of the set of filaments is bonded to at least one other member of the set of filaments; and a loop portion attached to other of the filament mesh member and the sheet, wherein the loop portion and the hook portion cooperate to secure the sheet to the filament mesh member.

Clause 11. The attachment system of clause 10, wherein (i) the hook portion is attached to the one of the filament mesh member and the sheet via a first adhesive and (ii) the loop portion is attached to the other of the filament mesh member and the sheet via a second adhesive.

Clause 12. The attachment system of clause 10, wherein the one of the loop portion and the hook portion is attached to the filament mesh member via one or more hooks that extend from a back of the one of the loop portion and the hook portion, into the filament mesh member, and engage at least one filament of the set of filaments.

Clause 13. The attachment system of clause 10, wherein the one of the loop portion and the hook portion is attached to the filament mesh member via a retainer and a connector, wherein (i) the connector extends from a back of the one of the loop portion and the hook portion, (ii) through the filament mesh member, and (iii) to the retainer which engages an opposing side of the filament mesh member relative to the hook and loop fastening system.

Clause 14. The attachment system of any one of clauses 10 to 13, wherein the filament mesh member and the sheet collectively form a vehicle seat bottom.

Clause 15. The attachment system of any one of clauses 10 to 13, wherein the filament mesh member and the sheet collectively form a vehicle seat back.

Clause 16. A method comprising: engaging a first portion of a hook and loop fastening system with a second portion of the hook and loop fastening system to secure a cloth cover to a filament mesh member that comprises a set of filaments of thermoplastic material, wherein each member of the set of filaments is bonded to at least one other member of the set of filaments.

Clause 17. The method of clause 16 further comprising attaching the first portion of the hook and loop fastening system to the filament mesh member prior to engaging the first portion with the second portion.

Clause 18. The method of any one of clauses 16 to 17 further comprising attaching the second portion of the hook and loop fastening system to the cloth cover prior to engaging the first portion with the second portion.

Clause 19. The method of any one of clauses 16 to 18, wherein the method comprises forming a vehicle seat bottom via the engagement between the first portion of the hook and loop fastening system with the second portion of the hook and loop fastening system.

Clause 20. The method of any one of clauses 16 to 18, wherein the method comprises forming a vehicle seat back via the engagement between the first portion of the hook and loop fastening system with the second portion of the hook and loop fastening system.

It should be understood that the designations of first, second, third, fourth, etc. for any component, state, or condition described herein may be rearranged in the claims so that they are in chronological order with respect to the claims. Furthermore, it should be understood that any component, state, or condition described herein that does not have a numerical designation may be given a designation of first, second, third, fourth, etc. in the claims if one or more of the specific component, state, or condition are claimed.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A product comprising:
a filament mesh member comprising a set of filaments of thermoplastic material, wherein each member of the set of filaments is bonded to at least one other member of the set of filaments;
a trim cover disposed over the filament mesh member; and
a hook and loop fastening system comprising a loop portion and a hook portion, wherein (i) one of the loop portion and the hook portion is attached to the filament mesh member and (ii) the other of the loop portion and the hook portion is attached to the trim cover, wherein the loop portion and the hook portion cooperate to secure the trim cover to the filament mesh member.

2. The product of claim 1, wherein the one of the loop portion and the hook portion is attached to the filament mesh member via an adhesive.

3. The product of claim 1 or 2, wherein the other of the loop portion and the hook portion is attached to the trim cover via an adhesive.

4. The product of any of the preceding claims, wherein the one of the loop portion and the hook portion is attached to the filament mesh member via one or more hooks that extend from a back of the one of the loop portion and the hook portion, into the filament mesh member, and engage at least one filament of the set of filaments,
wherein preferably the other of the loop portion and the hook portion is attached to the trim cover via an adhesive.

5. The product of any of the preceding claims, wherein the one of the loop portion and the hook portion is attached to the filament mesh member via a retainer and a connector, wherein (i) the connector extends from a back of the one of the loop portion and the hook portion, (ii) through the filament mesh member, and (iii) to the retainer which engages an opposing side of the filament mesh member relative to the hook and loop fastening system,
wherein preferably the other of the loop portion and the hook portion is attached to the trim cover via an adhesive.

6. The product of any of the preceding claims, wherein the product is a vehicle seat bottom,
or wherein the product is a vehicle seat back.

7. An attachment system comprising:
a hook portion attached to one of a filament mesh member and a sheet, wherein the filament mesh member comprises a set of filaments, wherein each member of the set of filaments is bonded to at least one other member of the set of filaments; and
a loop portion attached to other of the filament mesh member and the sheet, wherein the loop portion and the hook portion cooperate to secure the sheet to the filament mesh member.

8. The attachment system of claim 7, wherein (i) the hook portion is attached to the one of the filament mesh member and the sheet via a first adhesive and (ii) the loop portion is attached to the other of the filament mesh member and the sheet via a second adhesive.

9. The attachment system of claim 7 or 8, wherein the one of the loop portion and the hook portion is attached to the filament mesh member via one or more hooks that extend from a back of the one of the loop portion and the hook portion, into the filament mesh member, and engage at least one filament of the set of filaments.

10. The attachment system of any of claims 7 to 9, wherein the one of the loop portion and the hook portion is attached to the filament mesh member via a retainer and a connector, wherein (i) the connector extends from a back of the one of the loop portion and the hook portion, (ii) through the filament mesh member, and (iii) to the retainer which engages an opposing side of the filament mesh member relative to the hook and loop fastening system.

11. The attachment system of any of claims 7 to 10, wherein the filament mesh member and the sheet collectively form a vehicle seat bottom,
or wherein the filament mesh member and the sheet collectively form a vehicle seat back.

12. A method comprising:
engaging a first portion of a hook and loop fastening system with a second portion of the hook and loop fastening system to secure a cloth cover to a filament mesh member that comprises a set of filaments of thermoplastic material, wherein each member of the set of filaments is bonded to at least one other member of the set of filaments.

13. The method of claim 12 further comprising attaching the first portion of the hook and loop fastening system to the filament mesh member prior to engaging the first portion with the second portion.

14. The method of claim 12 or 13 further comprising attaching the second portion of the hook and loop fastening system to the cloth cover prior to engaging the first portion with the second portion.

15. The method of any of claims 12 to 14, wherein the method comprises forming a vehicle seat bottom via the engagement between the first portion of the hook and loop fastening system with the second portion of the hook and loop fastening system,
or wherein the method comprises forming a vehicle seat back via the engagement between the first portion of the hook and loop fastening system with the second portion of the hook and loop fastening system.
